## Europäisches Patentamt

## European Patent Office

## Office européen des brevets

(11) Veröffentlichungsnummer: **0 154 915**

**B1**

(12) **EUROPÄISCHE PATENTSCHRIFT**

(45) Veröffentlichungstag der Patentschrift:
18.05.88

(21) Anmeldenummer: **85102380.4**

(22) Anmeldetag: **02.03.85**

(51) Int. Cl.⁴: **C 02 F 3/12,** B 01 D 29/38,
B 01 D 29/04

(54) **Verfahren und Vorrichtung zur biologischen Reinigung von Abwasser.**

(30) Priorität: **09.03.84 DE 3408759**

(43) Veröffentlichungstag der Anmeldung:
**18.09.85 Patentblatt 85/38**

(45) Bekanntmachung des Hinweises auf die Patenterteilung:
**18.05.88 Patentblatt 88/20**

(84) Benannte Vertragsstaaten:
**AT CH DE FR GB LI**

(56) Entgegenhaltungen:
**EP-A-0 100 007**
**EP-A-0 112 095**
**WO-A-84/01308**
**DE-A-1 952 699**
**DE-A-2 102 780**
**DE-A-2 301 726**

(73) Patentinhaber: **Linde Aktiengesellschaft, Abraham-Lincoln- Strasse 21, D-6200 Wiesbaden (DE)**

(72) Erfinder: **Wildmoser, Alfred, Dipl.- Ing., Flurstrasse 12, D-8013 Haar (DE)**
Erfinder: **Feldkirchner, Heinz, Dr. rer. nat., Riedeselstrasse 33, D-8130 Starnberg (DE)**

(74) Vertreter: **Schaefer, Gerhard, Dr., Linde Aktiengesellschaft Zentrale Patentabteilung, D-8023 Höllriegelskreuth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren zur biologischen Reinigung von Abwasser, bei dem das Abwasser in einem Belebungsbecken in Gegenwart von Trägerteilchen für Mikroorganismen mit Belebtschlamm vermischt und mit einem sauerstoffhaltigen Gas begast wird, anschließend das Abwasser-Belebtschlamm-Gemisch unter Zurülckhaltung der Trägerteilchen über einen Ablauf in eine Nachklärung geleitet wird, in der Nachklärung gereinigtes Abwasser und Belebtschlamm getrennt werden und bei dem Belebtschlamm aus der Nachklärung in das Belebungsbecken zurückgefördert wird, sowie eine Vorrichtung zur Durchführung des Verfahrens.

Bekanntlich kann bei Verwendung von frei schwebenden Trägerteilchen als Ansiedlungsfläche für Mikroorganismen die Biomassenkonzentration auch in Belebtschlammanlagen wesentlich erhöht und auf diese Weise ein schnellerer Abbau von im Abwasser vorhandenen Schmutzstoffen erreicht werden. Dabei werden allerdings insbesondere offenzellige Schaumstoffteilchen als Trägerteilchen eingesetzt, deren spezifisches Gewicht, deren Größe und deren Makroporen so aufeinander abgestimmt werden, daß zur Intensivierung des Stoffaustausches ein Auf- und Absteigen der Schaumstoffteilchen im Belebungsbecken aufgrund der vorherrschenden Strömung und Begasung ohne weiteres möglich ist.

Aus der DE-A-3 137 055 ist ein Verfahren zur biologischen Reinigung von organische Verunreinigungen enthaltendem Abwasser beschrieben, bei dem das Abwasser in einem Reaktor in Gegenwart von Belebtschlamm mit Luft und/oder reinem Sauerstoff begast und anschließend das Abwasser-Belebtschlamm-Gemisch in einer Nachklärung zu gereinigtem Wasser und Schlamm aufgeteilt wird. In den Reaktor werden als Trägermaterial für die Mikroorganismen makroporöse Stoffteilchen mit geringem spezifischen Gewicht in stückiger und/oder granulierter Form in solcher Menge eingebracht, daß die einzelnen Stoffteilchen frei beweglich im Abwasser schweben. Belebtschlamm aus der Nachklärung wird in das Belebungsbecken zurückgeführt.

Nachteilig beim Betrieb eines Belebungsbeckens unter Einsatz solcher Trägerteilchen ist jedoch, daß mit der zum Auslauf des Belebungsbeckens gerichteten Strömung des Abwasser-Belebtschlamm-Gemisches allmählich ein Verfrachten der Trägerteilchen zum Auslauf hin stattfindet. Dadurch ergibt sich dann am Auslauf, der zum Zurückhalten der Trägerteilchen in der Regel mit einem Sieb oder Lochblech oder ähnlichen Einrichtungen versehen ist, eine Konzentrierung der Trägerteilchen, so daß im Lauf der Zeit die Trägerteilchen nicht nur ein Zusetzen des Auslaufs bewirken, sondern auch im Einlaufbereich des Belebungsbeckens, in dem gerade eine hohe Biomassenkonzentration erwünscht ist, nicht mehr in ausreichender Zahl vorhanden sind.

Die DE-A-1 952 699 betrifft ein Belebtschlamm-Verfahren ohne Verwendung von Trägerteilchen. Wird eine Anlage nach dem Belebtschlamm-Verfahren mit Rohabwasser, d.h. ohne mechanische Vorreinigung, beschickt, so können im Rohabwasser enthaltene Grobstoffe und sperrige Teile die Belüftungseinrichtungen verstopfen. Mit dem bekannten Verfahren sollen störende Einflüsse des Rohabwassers auf die Belüftung der gelösten Stoffe und der Schwebstoffe abgewehrt werden.

Die EP-A-0 112 095 beschreibt ein Verfahren zur Belüftung von Wasser, bei dem Trägerteilchen für Mikroorganismen mit dem Wasser unter Begasung in einem Belebungsbecken vermischt werden. An einem Ende des Beckens wird eine siebartige Trennwand angeordnet. Hinter der Trennwand befindet sich ein Belüfter, dessen Zweck es ist, die Trägerteilchen von der Trennwand wegzudrängen. Diese ältere Anmeldung wurde jedoch erst nach dem Prioritätsdatum der vorliegenden Anmeldung veröffentlicht.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise eine Konzentrierung der frei im Abwasser-Belebtschlamm-Gemisch schwebenden Trägerteilchen am Auslauf des Belebungsbeckens und Zusetzen des Auslaufs vermieden werden kann.

Diese Aufgabe wird erfindungsgemäß dadurch gelöst, daß das Zurückhalten der Trägerteilchen in einem Bereich vor dem Ablauf des Belebungsbeckens, in dem die Strömungsgeschwindigkeit des Abwasser-Belebtschlamm-Gemisches im Vergleich zu derjenigen am Ablauf gering ist, mit Hilfe einer für Trägerteilchen undurchlässigen Trennwand durchgeführt, vor und hinter der Trennwand eine Zusatzbegasung vorgenommen wird, daß die Zusatzbegasung hinter der Trennwand unterhalb der vor der Trennwand befindlichen Zusatzbegasung und weit unterhalb der Ablauf Öffnung des Belebungsbeckens durchgeführt wird und die Zusatzbegasung so eingestellt wird, daß die vor der Trennwand vorhandenen Trägerteilchen von dieser verdrängt werden.

Dadurch, daß erfindungsgemäß die Trägerteilchen nicht mehr am Auslauf, sondern bereits in einem Bereich des Belebungsbeckens zurückgehalten werden, in dem die Strömungsgeschwindigkeit in Richtung auf den Auslauf noch gering ist, kann ein Verdrängen der Trägerteilchen von der Trennwand auch bei geringer Stärke der Zusatzbegasung sicher erreicht werden. Bei entsprechender Einstellung der Begasung erfolgt dabei das Verdrängen der sich vor der Trennwand ansammelnden Trägerteilchen nicht nur entgegen der Strömungsrichtung des Abwasser-Belebtschlamm-Gemisches, sondern auch an der Trennwand entlang nach oben, wodurch sich aufgrund der nach oben wandernden Trägerteilchen auch ein mechanisches Ablösen von an der Trennwand festsitzenden Trägerteilchen und Feststoffen ergibt. Zusätzlich wird mit Hilfe der Zusatzbegasung der Sauerstoffgehalt des ablaufenden Abwasser-Belebtschlamm-Gemisches soweit erhöht, daß in der Nachklärung keine anaeroben Bedingungen mit unerwünschter Schlammflotation auftreten.

Die Zusatzbegasung hinter der Trennwand wird erfindungsgemäß unterhalb der vor der Trennwand befindlichen Zusatzbegasung und weit unterhalb der Ablauföffnung des Belebungsbeckens durchgeführt. Dadurch wird bei geeigneter Stärke dieser Zusatzbegasung eine walzenartige Gegenströmung zur Ablaufströmung erzeugt, in der die Trägerteilchen von der Trennwand wegtransportiert werden.

Gute Ergebnisse hinsichtlich des Verdrängens der Trägerteilchen von der Trennwand lassen sich erzielen, wenn die Trägerteilchen in einem Bereich vor dem Ablauf des Belebungsbeckens zurückgehalten werden, in dem die Strömungsgeschwindigkeit höchstens 0,1 m/sec. in Richtung auf den Ablauf beträgt.

Um zu vermeiden, daß die von der Trennwand mit Hilfe der Blasenströme der Zusatzbegasung verdrängten Trägerteilchen gleich wieder an die Trennwand angeschwemmt werden, und um eine möglichst gleichmäßige Verteilung der Trägerteilchen im Belebungsbecken zu erhalten, ist es außerdem vorteilhaft, die von der Trennwand verdrängten Trägerteilchen in den Zulaufbereich des Belebungsbeckens zurückzufördern. Dabei ist es zur Verringerung der internen Wasserumwälzung zweckmäßig, die Trägerteilchen vor und während des Zurückförderns zumindest teilweise von Abwasser und gegebenenfalls zusätzlich zumindest von Überschußschlamm zu befreien. Das anfallende Abwasser kann in das Belebungsbecken zurückgeleitet und der anfallende Schlamm aufgefangen und zu einer Schlammbehandlung abgezogen werden.

Eine Vorrichtung zur Durchführung des Verfahrens umfaßt ein Belebungsbecken, in dem Trägerteilchen für Mikroorganismen vorhanden sind, einen Zulauf für das zu behandelnde Abwasser zum Belebungsbecken und einen mit einer Rückhalteeinrichtung für Trägerteilchen versehenen Ablauf für Abwasser-Belebtschlamm-Gemisch vom Belebungsbecken zu einer Nachklärung und eine Schlammrückleitung von der Nachklärung zum Belebungsbecken. Erfindungsgemäß ist eine solche Vorrichtung dadurch gekennzeichnet, daß als Rückhalteeinrichtung in einem Bereich vor dem Ablauf des Belebungsbeckens, in dem die Strömungsgeschwindigkeit des Abwasser-Belebtschlamm-Gemisches im Vergleich zu derjenigen am Ablauf gering ist, eine Trennwand angeordnet ist, die Trennwanddurchtrittsöffnungen aufweist, die kleiner sind als die kleinsten Trägerteilchen, und der Trennwandbegasungseinrichtungen zugeordnet sind, wobei die sich hinter der Trennwand befindliche Begasungseinrichtung unterhalb der sich vor der Trennwand befindlichen Begasungseinrichtung und weit unterhalb der Ablauföffnung des Belebungsbeckens angeordnet und die Begasungseinrichtungen eine auf strömende und die Trennwand anströmende Strömung erzeugen.

Die Trennwand ist zweckmäßigerweise zumindest im unteren Bereich unterhalb des Ablaufs geneigt zu derjenigen Beckenwand angeordnet, in der der Ablauf vorhanden ist. Bei großer Beckenhöhe ergibt sich dadurch eine wesentliche Verkleinerung der zu installierenden Trennwandfläche, wobei durch die geneigte Anordnung der Trennwand im unteren Bereich sichergestellt ist, daß darunter sich sammelnde Trägerteilchen durch die Wirkung nach oben zum Ablaufgerichteten Wasserströmung schräg nach oben verdrängt und nicht an die Trennwand angepreßt werden, wie es sich bei einem waagrechten Teilverlauf der Trennwand ergeben würde.

Bei einer solchen Ausbildung der Trennwand sind vorteilhafterweise sowohl vor der Unterkante des senkrechten Teils der Trennwand als auch unterhalb des geneigt angeordneten Teils der Trennwand Begasungseinrichtungen vorgesehen. Diese können beispielsweise als gelochte Rohre ausgebildet sein, die parallel zur Trennwand verlaufen. Die vor der Unterkante des senkrechten Teils der Trennwand verlaufende Begasungseinrichtung übernimmt dabei die Aufgabe, die Trägerteilchen am senkrechten Teil der Trennwand nach oben zu spülen, wodurch aufgrund der Bewegung der Trägerteilchen gegeneinander ein Reinigen der Trennwand von anhaftenden Trägerteilchen und Feststoffen bewirkt wird. Zur Erzielung dieses Effektes ist eine grobblasige Begasung ausreichend. Der Begasungseinrichtung unterhalb des geneigt ausgebildeten Teils der Trennwand kommt dagegen die Aufgabe zu, die Trägerteilchen von der Trennwand zu verdrängen, was durch den sich nach oben ausbreitenden Blasenschwarm erreicht wird. Durch Anordnung dieser Begasungseinrichtung nahe des Beckenbodens und nahe der im oberen Bereich den Auslauf aufweisenden Beckenwand wird bei ausreichender Begasungsstärke eine der Ablaufströmung entgegenwirkende, walzenartige Strömung erzeugt, die einen Transport der Trägerteilchen weg von der Trennwand ermöglicht.

Zur Erzielung einer optimalen Wirkung der Begasungseinrichtungen sind diese mit Vorteil schwenkbar ausgebildet. Damit kann dann nicht nur die Stärke der Begasung sondern auch die Richtung der Begasung so variiert werden, daß auch bei großer hydrauslischer Belastung des Belebungsbeckens und somit bei höherer Strömungsgeschwindigkeiten ein Verdrängen von Trägerteilchen von der Trennwand möglich ist. Beispielsweise kann die hinter der Trennwand befindliche Begasungseinrichtung so ausgerichtet werden, daß der mit dieser erzeugte Blasenstrom schräg gegen die Rückseite der Trennwand gerichtet ist.

Zur Vermeidung des erneuten Anlegens der von der Trennwand mit Hilfe der Begasungseinrichtung verdrängten Trägerteilchen und zur Verwirklichung einer gleichmäßigen Verteilung von Trägerteilchen im gesamten Belebungsbecken, ist außerdem nach einer weiteren vorteilhaften Ausgestaltung der Vorrichtung in dem Bereich vor der Trennwand, in dem die höchste Trägerteilchenkonzentration vorhanden ist, eine Rückfördereinrichtung für Trägerteilchen zum Zulaufbereich des Belebungsbeckens vorgesehen.

Die Rückfördereinrichtung ist zweckmäßigerweise als Mammutpumpe und/oder als Strahlpumpe ausgebildet. Andere Fördereinrichtungen, wie Trog- oder Kettenförderer sind ebenso möglich. Falls eine Mammutpumpe verwendet wird, kann diese über einen Teilbereich der im Belebungsbecken zur Sauerstoffversorgung des Abwasser-Belebtschlamm-Gemisches installierten Begasungseinrichtungen angeordnet sein, wobei nur ein Teil der von diesen Begasungseinrichtungen aufsteigenden Gasblasen mittels einem Auffangtrichter zur Rückförderung von Abwasser-Belebtschlamm-Gemisch und Trägerteilchen genutzt werden kann. Falls es sich als notwendig erweist, kann selbstverständlich in das Förderrohr der Mammutpumpe Zusatzluft eingespeist werden. Ein höhenverstellbarer sowie ortsveränderlicher Aufbau der Mammutpumpe ist gegebenenfalls sinnvoll, um die Lage der Mammutpumpe dem Ort der höchsten Trägerteilchenkonzentration sowie den von den Begasungseinrichtungen erzeugten Blasenströmen anpassen zu können. Wichtig ist, daß mit der Mammutpumpe die durch die Blasenströme aufrechterhaltene Bewegung der Trägerteilchen im Belebungsbecken nicht wesentlich beeinflußt wird.

Werden zusätzlich zur oder anstelle der Mammutpumpe Strahlpumpen als Fördereinrichtungen verwendet, können diese im Bereich der höchsten Trägerteilchenkonzentration nahe des Beckenbodens angeordnet und mit Wasser und/oder Luft betrieben werden.

Insbesondere bei Verwendung einer Mammutpumpe oder auch eines Trog- oder Kettenförderers als Rückfördereinrichtung ist es von Vorteil, wenn dieser eine Abtropfeinrichtung und gegebenenfalls eine Preßeinrichtung für die Trägerteilchen zugeordnet ist. Dadurch kann zum einen die interne Wasserumwälzung gering gehalten werden. Zum anderen können beim Einsatz flexibler Trägerteilchen diese durch das Zusammenpressen in der Preßeinrichtung von anhaftenden Feststoffen, überschüssigen Bakterien und Flüssigkeit befreit werden, wobei ein nur mäßiges Zusammenpressen der Trägerteilchen auf 5 bis 30 % ihres ursprünglichen Volumens verhindert, das sämtliche Biomasse aus den Trägerteilchen entfernt wird. Als Preßeinrichtung können beispielsweise zwei gegenseitig rotierende Walzen verwendet werden, deren Abstand so gewählt ist, daß der zwischen den Walzen vorhandene Spalt dem gewünschten Preßvolumen der Trägerteilchen entspricht. Der von den Trägerteilchen mit Hilfe der Preßeinrichtung ausgepreßte Schlamm wird vorzugsweise als Überschußschlamm aus dem System abgezogen.

Um nach der Abtropfeinrichtung und der Preßeinrichtung ohne besonderen zusätzlichen Energieaufwand ein sicheres Zurückleiten der Trägerteilchen zum Zulaufbereich des Belebungsbeckens zu ermöglichen, steht die Rückfördereinrichtung zweckmäßigerweise mit der Schlammrückleitung in Verbindung.

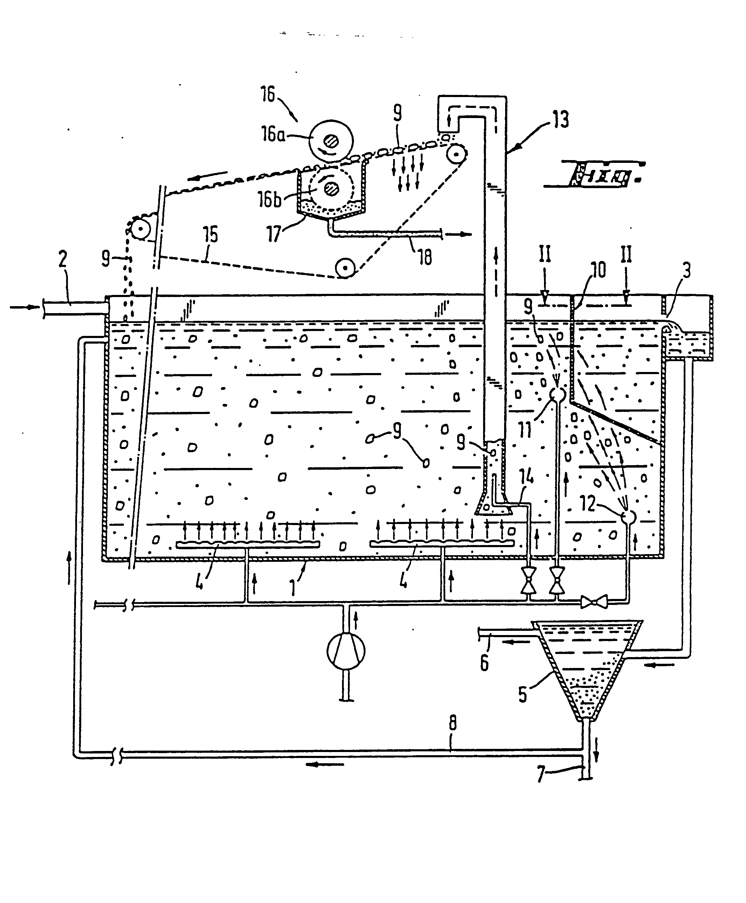

Ein Ausführungsbeispiel einer erfindungsgemäßen Vorrichtung ist der Zeichnung schematisch dargestellt.

Die Figur zeigt ein Belebungsbecken einer Abwasserreinigungsanlage mit der erfindungsgemäßen Anordnung der Trennwand, der Zusatzbegasung und der Rückfördereinrichtung.

In der Figur ist mit 1 ein Belebungsbecken zur biologischen Behandlung von Abwasser bezeichnet, das einen Zulauf 2 für zu behandelndes Abwasser, einen am oberen Beckenrand angeordneten Ablauf 3 für behandeltes Abwasser-Belebtschlamm-Gemisch sowie nahe des Beckenbodens Begasungseinrichtungen 4 aufweist. Über diese wird zur Versorgung der Mikroorganismen mit Sauerstoff Luft und/oder zumindest weitgehend reiner Sauerstoff eingetragen. Der Ablauf 3 ist an ein Nachklärbecken 5 angeschlossen, das in üblicher Weise mit einer Ableitung 6 für gereinigtes Abwasser, einer Schlammableitung 7 für Überschußschlamm sowie mit einer Schlammrückleitung 8 zum Belebungsbecken 1 ausgestattet ist.

Im Belebungsbecken 1 sind zur Steigerung der Biomassenkonzentration Trägerteilchen 9 als Ansiedlungsfläche für Mikroorganismen frei schwebend in einer Menge vorhanden, die einem Volumenanteil des Belebungsbeckens von 20 bis 40 % entspricht. Damit die Trägerteilchen 9 zur Intensivierung des Stoffumsatzes aufgrund der im Belebungsbecken 1 vorherrschenden Strömungen auf- und absteigen können, sollten diese ein spezifisches Gewicht in trockenem Zustand von 20 bis 200 kg/m³, eine Größe von 5 bis 50 mm und Makroporen von 0,1 bis 5 mm aufweisen. Als Material für die Trägerteilchen 9 kommt vorzugsweise offenzelliger Schaumstoff, wie Polyurethanschaumstoff, in Frage.

Um zu vermeiden, daß die Trägerteilchen 9 mit der zum Ablauf 3 gerichteten Strömung im Belebungsbecken 1 nicht in das Nachklärbecken 5 ausgetragen werden, ist dem Ablauf 3 eine Trennwand 10 mit Durchtrittsöffnungen 10' zugeordnet, wobei die Durchtrittsöffnungen kleiner als die kleinsten Trägerteilchen 9 bemessen sind. Die Trennwand 10 kann beispielsweise aus Lochblechen aufgebaut sein.

Die Trennwand 10 ist in einem Bereich vor dem Ablauf 3 des Belebungsbeckens 1 angeordnet, in dem die Strömungsgeschwindigkeit des Abwasser-Belebtschlamm-Gemisches in Richtung auf den Ablauf höchstens 0,1 m/sec. beträgt. Damit die Trennwandfläche insbesondere bei großer Beckenhöhe klein gehalten werden kann, ist die Trennwand 10 im unteren Bereich unterhalb des Ablaufs 3 geneigt zur Beckenwand ausgebildet. Selbstverständlich ist, daß, falls sich die Trennwand 10 nicht über die gesamte Beckenbreite erstreckt, auch seitliche Trennwände vorgesehen werden müssen, wodurch sich dann eine korbartige Form der Trennwand 10 um den Ablauf 3 ergibt.

Zur Vermeidung des Anlagerns und Ansammelns von Trägerteilchen 9 an der Trennwand 10 sind dieser zusätzliche Begasungseinrichtungen 11, 12 zugeordnet, die beispielsweise aus parallel zur Trennwand 10 verlaufenden, perforierten Rohren gefertigt sein können. Die eine Begasungseinrichtung 11 ist dabei unmittelbar vor der Unterkante des senkrechten Teils der Trennwand 10 angeordnet, so daß der mit dieser Begasungseinrichtung erzeugte Blasenstrom ein Aufspülen der Trägerteilchen 9 an der Trennwand 10 nach oben und damit ein Reinigen der Trennwand 10 von anhaftenden Trägerteilchen und Feststoffen bewirkt, wobei dieser Effekt durch die beim Aufspülen erzeugte Berührung der Trägerteilchen untereinander verstärkt wird. Die andere Begasungseinrichtung 12 ist dagegen unterhalb des geneigten Teils hinter dem senkrechten Teil der Trennwand 10 angeordnet. Dieser Begasungseinrichtung 12 kommt im wesentlichen die Aufgabe zu, die Trägerteilchen 9 von der Trennwand 10 zu verdrängen, was durch den sich nach oben erweiternden Blasenschwarm erreicht wird. Durch die Einstellung der Gasaustrittsöffnungen der Begasungseinrichtung 12 schräg nach oben in Richtung auf die Rückseite des senkrechten Teils der Trennwand 10 kann dieser Effekt nocht verstärkt werden. Mit dieser Begasungseinrichtung wird die Ausbildung einer der Abströmrichtung des Abwasser-Belebtschlamm-Gemisches entgegengerichteten Strömungswalze erreicht, mit der die Trägerteilchen 9 von der Trennwand 10 wegtransportiert werden. Zur Einstellung einer optimalen Wirkung sind die Begasungseinrichtungen 11, 12 vorzugsweise beweglich ausgebildet.

Zur Vermeidung des erneuten Anlagerns der von der Trennwand 10 mit Hilfe der Begasungseinrichtungen 11, 12 verdrängten Trägerteilchen 9 und zur Aufrechterhaltung einer gleichmäßigen Verteilung der Trägerteilchen 9 im Belebungsbecken 1 ist in einem Bereich vor der Trennwand 10, in dem eine hohe Trägerteilchenkonzentration zu erwarten ist, eine Rückfördereinrichtung 13 für Trägerteilchen 9 vorgesehen. Diese ist in der Figur als Mammutpumpe dargestellt, kann jedoch auch als Ketten- oder Trogförderer oder als Strahlpumpe ausgebildet sein. Das Förderrohr der Mammutpumpe 13 ist dabei so über einer der über dem Beckenboden befindlichen Begasungseinrichtungen 4 angeordnet, das ein Teil des aus dieser aufsteigenden Blasenschwarms zur Förderung von Abwasser-Belebtschlamm-Gemisch und Trägerteilchen im Förderrohr verwendet werden kann. Falls dieser Gasanteil nicht ausreicht, ist am Beginn des Förderrohrs eine Einspeiseleitung 14 für Zusatzluft vorhanden.

Am oberen Ende des Förderrohres ist ein perforiertes, in Richtung auf den Zulaufbereich des Belebungsbeckens 1 geneigt verlaufendes Förderband 15 vorgesehen. Dieses fördert die ankommenden Trägerteilchen 9, nach dem die mit der Mammutpumpe ebenso hochgepumpte Flüssigkeit durch die Perforierungen des Förderbandes 15 in das Belebungsbecken 1 zurückgelaufen ist, zu einer Preßeinrichtung 16, die zueinander gegenläufig rotierende Preßwalzen 16a und 16b aufweist. Durch die Gegenbewegung der Preßwalzen 16a und 16b und den Walzendruck, der gegebenenfalls mit Hilfe von Federn oder ähnlichem erzeugt wird, werden die Trägerteilchen auf 5 bis 30 % ihres ursprünglichen Volumens komprimiert und die anhaftenden Feststoffe, Bakterien und Flüssigkeiten ausgepreßt. Die regenerierten Trägerteilchen werden dann von dem Förderband 15, das zwischen den Preßwalzen 16a und 16b hindurchgeht, in den Zulaufbereich des Belebungsbeckens 1 transportiert. Die von den Trägerteilchen beim Auspressen entfernten Feststoffe, Bakterien und Flüssigkeiten gelangen in einen unterhalb der beiden Preßwalzen 16a und 16b angeordneten Auffangbehälter 17, wozu die untere Preßwalze 16b vorteilhafterweise perforiert ausgebildet ist. Der Durchmesser der Löcher der unteren Preßwalze 16b ist dabei ebenso wie der Lochdurchmesser des Förderbandes 15 so zu wählen, daß nur das mit Feststoffen und Bakterien beladene Wasser abläuft, nicht aber Trägerteilchen hindurchfallen können. Dies wird mit einem Lochdurchmesser von 2 bis 10 mm erreicht. Die Anzahl der Löcher sollte vorteilhafterweise 1 bis 5 pro 10 cm betragen. An den Auffangbehälter 17 ist ein Schlammablauf 18 angeschlossen, der zur Weiterbehandlung des anfallenden Schlamms beispielsweise mit einem Eindicker in Verbindung steht.

**Patentansprüche**

1. Verfahren zur biologischen Reinigung von Abwasser, bei dem das Abwasser in einem Belebungsbecken in Gegenwart von Trägerteilchen für Mikroorganismen mit Belebtschlamm vermischt und mit einem sauerstoffhaltigen Gas begast wird, anschließend das Abwasser-Belebtschlamm-Gemisch unter Zurückhaltung der Trägerteilchen über einen Ablauf in eine Nachklärung geleitet wird, in der Nachklärung gereinigtes Abwasser und Belebtschlamm getrennt werden und bei dem Belebtschlamm aus der Nachklärung in das Belebungsbecken zurückgefördert wird, dadurch gekennzeichnet, daß das Zurückhalten der Trägerteilchen in einem Bereich vor dem Ablauf des Belebungsbeckens, in dem die Strömungsgeschwindigkeit des Abwasser-Belebtschlamm-Gemisches im Vergleich zu derjenigen am Ablauf gering ist, mit Hilfe einer für Trägerteilchen undurchlässigen Trennwand durchgeführt, vor und hinter der Trennwand eine Zusatzbegasung vorgenommen wird, daß die Zusatzbegasung hinter der Trennwand unterhalb der vor der Trennwand befindlichen Zusatzbegasung und weit unterhalb der Ablauföffnung des Belebungsbeckens durchgeführt wird und die Zusatzbegasung so eingestellt wird, daß die vor der Trennwand vorhandenen Trägerteilchen von dieser verdrängt werden.

2. Verfahren nach Anspruch 1, dadurch gekennzeichnet, daß das Zurückhalten der Trägerteilchen in einem Bereich vor dem Ablauf des Belebungsbeckens durchgeführt wird, in dem die Strömungsgeschwindigkeit höchstens 0,1 m/sec in Richtung auf den Ablauf beträgt.

3. Verfahren nach Anspruch 1 oder 2, dadurch gekennzeichnet, daß die von der Trennwand verdrängten Trägerteilchen von einem Ort höchster Trägerteilchenkonzentration in den Zulaufbereich des Belebungsbeckens zurückgefördert werden und während des Zurückförderns zumindest teilweise von Abwasser und gegebenenfalls zusätzlich zumindest von Überschußschlamm befreit werden.

4. Vorrichtung zur Durchführung des Verfahrens nach einem der Ansprüche 1 bis 3, mit einem Belebungsbecken, in dem Trägerteilchen für die Mikroorganismen vorhanden sind, mit einem Zulauf für das zu behandelnde Abwasser zum Belebungsbecken und einem mit einer Rückhalteeinrichtung für Trägerteilchen versehenen Ablauf für Abwasser-Belebtschlamm-Gemisch vom Belebungsbecken zu einer Nachklärung und mit einer Schlammrückleitung von der Nachklärung zum Belebungsbecken, dadurch gekennzeichnet, daß als Rückhalteeinrichtung in einem Bereich vor dem Ablauf (3) des Belebungsbeckens (1), in dem die Strömungsgeschwindigkeit des Abwasser-Belebtschlamm-Gemisches im Vergleich zu derjenigen am Ablauf (3) gering ist, eine Trennwand (10) angeordnet ist, die Trennwand (10) Durchtrittsöffnungen (10') aufweist, die kleiner sind als die kleinsten Trägerteilchen (9) und der Trennwand (10) Begasungseinrichtungen (11, 12) zugeordnet sind wobei die sich hinter der Trennwand befindliche Begasungseinrichtung (12) unterhalb der sich vor der Trennwand befindlichen Begasungseinrichtung (11) und weit unterhalb der Ablauföffnung des Belebungsbeckens angeordnet ist und die Begasungseinrichtungen eine aufströmende und die Trennwand (10) anströmende Strömung erzeugen.

5. Vorrichtung nach Anspruch 4, dadurch gekennzeichnet, daß die Trennwand (10) zumindest im unteren Bereich unterhalb des Ablaufs (3) geneigt zu derjenigen Beckenwand angeordnet ist, in der der Ablauf (3) vorhanden ist.

6. Vorrichtung nach Anspruch 5, dadurch gekennzeichnet, daß sowohl vor der Unterkante des senkrechten Teils der Trennwand als auch unterhalb des geneigt angeordneten Teils der Trennwand Begasungseinrichtungen vorgesehen sind.

7. Vorrichtung nach einem der Ansprüche 5 bis 6, dadurch gekennzeichnet, daß die Begasungseinrichtungen (11, 12) schwenkbar ausgebildet sind.

8. Vorrichtung nach einem der Ansprüche 5 bis 7, dadurch gekennzeichnet, daß der Trennwand (10) eine Reinigungseinrichtung zugeordnet ist.

9. Vorrichtung nach einem der Ansprüche 5 bis 8, dadurch gekennzeichnet, daß in dem Bereich vor der Trennwand (10), in dem die höchste Trägerteilchenkonzentration vorhanden ist, eine Rückfördereinrichtung (13, 15) für Trägerteilchen zum Zulaufbereich des Belebungsbeckens (1) vorgesehen ist und daß der Rückfördereinrichtung (13, 15) eine Abtropfeinrichtung und gegebenenfalls eine Preßeinrichtung (16) für die Trägerteilchen (9) zugeordnet ist.

10. Vorrichtung nach Anspruch 9, dadurch gekennzeichnet, daß die Rückfördereinrichtung als Mammutpumpe (13) und/oder als Strahlpumpe ausgebildet ist.

11. Vorrichtung nach Anspruch 9 oder 10, dadurch gekennzeichnet, daß die Ruckfördereinrichtung (13, 15) mit der Schlammrückleitung in Verbindung steht.

**Claims**

1. Process for the biological purification of waste water, in which the waste water is mixed with activated sludge in an activated sludge basin in the presence of carrier particles for microorganisms, and an oxygen-containing gas is passed in, the waste water/activated sludge mixture is then passed, via an outlet into a secondary settling tank while retaining the carrier particles, and purified waste water and activated sludge are separated in the secondary settling tank, and in which activated sludge is transported back from the secondary settling tank into the activated sludge basin, characterised in that the carrier particles are retained, with the aid of a partition which is impermeable to carrier particles, in a region of the activated sludge basin which is in front of its outlet and in which the flow rate of the waste water/activated sludge mixture is low compared with that at the outlet, additional gas being introduced in front of and behind the partition, and in that the introduction of additional gas behind the partition is carried out below the introduction of additional gas which takes place in front of the partition and far below the outlet opening of the activated sludge basin, and the introduction of additional gas is adjusted so that the carrier particles present in front of the partition are forced away from the latter.

2. Process according to Claim 1, characterised in that the carrier particles are retained in a region in front of the outlet of the activated sludge basin where the flow rate does not exceed 0.1 m/sec towards the outlet.

3. Process according to Claim 1 or 2, characterised in that the carrier particles forced away from the partition are returned from a site where the concentration of carrier particles is highest to the inlet region of the activated sludge basin and, during the return, are at least partially freed of waste water and, where appropriate, additionally at least of excess sludge.

4. Apparatus for carrying out the process according to one of Claims 1 to 3, having an activated sludge basin which contains carrier particles for micro-organisms, an inlet into the activated sludge basin for the waste water which is to be treated, and an outlet, which is provided with a carrier particle retaining device, for the waste water/activated sludge mixture from the activated sludge basin to a secondary settling tank, and a sludge return pipe from the secondary settling tank to the activated sludge basin, characterised in that a partition (10) is arranged as retaining device in a region in front of the outlet (3) from the activated sludge basin (1) in which the flow rate of the waste water/activated sludge mixture is low compared with that at the outlet (3), which partition (10) has through openings (10') which are smaller than the smallest carrier particles (9) and to which partition (10) gas-introduction devices (11, 12) are assigned, the gas-introduction device (12) located behind the partition being arranged below the gas-introduction device (11) located in front of the partition and far below the outlet opening of the activated sludge basin, and the gas-introduction devices generating an upward flow and a flow towards the partition (10).

5. Apparatus according to Claim 4, characterised in that the partition (10) is arranged, at least in the lower region below the outlet (3), inclined to that wall of the basin in which the outlet (3) is present.

6. Apparatus according to Claim 5, characterised in that gas-introduction devices are provided both in front of the lower edge of the vertical part of the partition and below the inclined part of the partition.

7. Apparatus according to one of Claims 5 to 6, characterised in that the gas-introduction devices (11, 12) are designed to be pivotable.

8. Apparatus according to one of Claims 5 to 7, characterised in that a cleaning device is assigned to the partition (10).

9. Apparatus according to one of Claims 5 to 8, characterised in that a returning device (13, 15) for carrier particles to the inlet region of the activated sludge basin (1) is provided in the region in front of the partition (10) where the concentration of carrier particles is highest, and in that a draining device and, where appropriate, a pressing device (16) for the carrier particles (9) is assigned to the returning device (13, 15).

10. Apparatus according to Claim 9, characterised in that the returning device is designed as a mammoth pump (13) and/or as a jet pump.

11. Apparatus according to Claim 9 or 10, characterised in that the returning device (13, 15) is connected to the sludge return pipe.

**Revendications**

1. Procédé de purification biologique d'eaux usées dans lequel les eaux usées sont mélangées dans un bassin d'activation en présence de particules porteuses de micro-organismes avec de la boue activée, on fait ensuite passer dans le mélange un gaz contenant de l'oxygène, et ensuite on fait passer le mélange eaux usées-boue activée en retenant les particules porteuses, par un trop-plein, dans une installation de post-clarification, dans laquelle les eaux usées purifiées et la boue activée sont séparées, la boue activée provenant de l'installation de post-clarification étant ensuite recyclée vers le bassin d'activation, caractérisé en ce que la retenue des particules porteuses a lieu dans une zone, située en amont de la sortie d'évacuation du bassin d'activation, dans laquelle la vitesse d'écoulement du mélange eaux usées-boue activée est plus faible que celle de l'évacuation, grâce à une cloison de séparation que les particules porteuses ne peuvent franchir, en ce qu'une quantité supplémentaire de gaz est amenée en amont et en aval de la cloison de séparation, en ce que l'introduction supplémentaire de gaz effectuée en aval de la cloison de séparation a lieu en-dessous du niveau de l'introduction supplémentaire de gaz effectuée en amont de la cloison et bien en-dessous de l'orifice d'évacuation du bassin d'activation et en ce que l'introduction supplémentaire de gaz est réglée de telle sorte que les particules porteuses se trouvant en amont de la cloison de séparation sont repoussées de celle-ci.

2. Procédé selon la revendication 1, caractérisé en ce, que la retenue des particules porteuses a lieu dans une zone en aval de la sortie d'évacuation du bassin d'activation dans laquelle la vitesse d'écoulement selon la direction d'évacuation est au maximum de 0,1 m par seconde.

3. Procédé selon la revendication 1 ou 2, caractérisé en ce que les particules porteuses repoussées de la paroi de séparation sont depuis un lieu de concentration maximum des particules porteuses recyclées vers la zone d'alimentation du bassin d'activation et en ce que, pendant le recyclage, elles sont au moins partiellement débarrassées des eaux usées et, le cas échéant, également au moins de la boue en excès.

4. Dispositif de mise en oeuvre du procédé selon l'une quelconque des revendications 1 à 3, comportant un bassin d'activation dans lequel se trouvent des particules porteuses de micro-organismes, une arrivée des eaux usées dans le bassin d'activation et une évacuation pourvue d'un dispositif de retenue des particules porteuses et destinée à faire passer le mélange eaux usées-boue activée provenant du bassin d'activation dans une installation de post-clarification et un dispositif de recyclage des boues de la post-clarification vers le bassin d'activation, caractérisé en ce que, comme dispositif de retenue, dans la zone située en amont de la sortie d'évacuation (3) du bassin d'activation (1), dans laquelle la vitesse d'écoulement du mélange eaux usées-boue activée est faible par rapport à la vitesse du mélange à la sortie d'évacuation (3), est disposée une cloison (10) traversée par des orifices de traversée (10') dont les dimensions sont plus faibles que celles des particules porteuses (9) les plus petites et, en ce que des dispositifs d'introduction de gaz (11, 12) coopèrent avec la cloison de séparation (10), le dispositif de gazéification (12) se trouvant en aval de la cloison de séparation étant situé en-dessous à un niveau inférieur à celui du dispositif d'introduction de gaz (11) se trouvant en amont de la cloison de séparation et bien inférieur à celui de l'orifice d'évacuation du bassin d'activation, le dispositif d'introduction de gaz créant un courant ascendant qui heurte la cloison de séparation (10).

5. Dispositif selon la revendication 4, caractérisé en ce que, tout au moins dans une zone située en-dessous de l'évacuation (3) la cloison de séparation (10) est inclinée vers la paroi du bassin dans laquelle se situe la sortie d'évacuation (3).

6. Dispositif selon la revendication 5, caractérisé en ce que, aussi bien devant l'arête inférieure de la partie verticale de la cloison de séparation qu'en-dessous de la partie inclinée de la cloison de séparation, sont disposés des dispositifs d'introduction de gaz ou dispositif de gazéification.

7. Dispositif selon l'une quelconque des revendications 5 et 6, caractérisé en ce que les dispositifs d'introduction de gaz (11 et 12) sont conçus de façon à pourvoir pivoter.

8. Dispositif selon l'une quelconque des revendications 5 à 7, caractérisé en ce qu'un dispositif de nettoyage coopère avec la cloison de séparation (10).

9. Dispositif selon l'une quelconque des revendications 5 à 8, caractérisé en ce que, dans la zone se trouvant an amont de la cloison de séparation (10) dans laquelle la concentration en particules porteuses est la plus élevée, se trouve une installation de recyclage (13, 15) des particules porteuses vers la zone d'alimentation du bassin d'activation (1) et en ce que, avec l'installation de recyclage (13, 15), coopère un dispositif d'égouttage et, le cas échéant, un dispositif d'essorage (16) des particules porteuses (9).

10. Dispositif selon la revendication 9, caractérisé en ce que l'installation de recyclage comprend une pompe Mammouth (13) et/ou un éjecteur.

11. Dispositif selon la revendication 9 ou 10, caractérisé en ce que l'installation de recyclage (13, 15) est en relation avec le dispositif de recyclage de la boue.